# EUROPEAN PATENT SPECIFICATION

(11) **EP 1 510 018 B1**
(45) Date of publication and mention of the grant of the patent: **12.11.2008**
(21) Application number: 03736730.7
(22) Date of filing: 28.05.2003
(51) Int. Cl.: H04B 7/185, H04Q 7/20

(54) **METHOD AND APPARATUS FOR ENABLING TRANSMISSION OF A WIRELESS RETURN CHANNEL SIGNAL IN A SATELLITE COMMUNICATIONS SYSTEM**
VERFAHREN UND VORRICHTUNG ZUR ERMÖGLICHUNG DER ÜBERTRAGUNG DES SIGNALS EINES DRAHTLOSEN RÜCKKANALS IN EINEM SATELLITENKOMMUNIKATIONSSYSTEM
PROCEDE ET APPAREIL POUR PERMETTRE L'EMISSION D'UN SIGNAL DE CANAL RETOUR SANS FIL DANS UN SYSTEME DE COMMUNICATION PAR SATELLITE

(30) Priority: 29.05.2002 US 383879 P
(43) Date of publication of application: 02.03.2005
(73) Proprietor: Thomson Licensing, 92100 Boulogne-Billancourt (FR)
(72) Inventor: MCNEELY, David, Lowell, Indianapolis, IN 46256 (US)
(74) Representative: Ruellan-Lemonnier, Brigitte
(86) International application number: PCT/US2003/016740
(87) International publication number: WO 2003/103300

(56) References cited:
- EP-A- 0 779 717
- EP-A- 0 825 773
- DE-A1- 19 547 604
- US-A- 3 646 444
- US-A- 5 311 550
- US-A- 5 790 939
- US-B1- 6 178 195
- US-B1- 6 400 314

## Description

### BACKGROUND OF THE INVENTION

### FIELD OF THE INVENTION

The present invention generally relates to satellite communications, and more particularly, to a method and apparatus for enabling transmission of a return channel signal in a system such as a satellite television broadcast system without requiring a telephone line connection.

### BACKGROUND OF THE INVENTION

The use of geosynchronous satellites to distribute television signals is known in the broadcasting industry and has helped revolutionize television distribution systems. As is known, there are many communications satellites encircling the earth occupying so-called "geosynchronous orbits" meaning that the satellites appear to be stationary relative to fixed points on earth. These satellites receive television signals originating from earth (i.e., "uplink" signals) and retransmit the signals back to earth (i.e., "downlink" signals). While such satellites typically employ directional antennas to transmit downlink signals, the high altitude of the satellites enables a large portion of the earth to receive the downlink signals. Thus, a single satellite can distribute television signals to entire continents or large portions of continents, and receiving antennas on such continents are capable of receiving signals from a plurality of such satellites.

Satellite television provides subscribers with a large number of channels from which to choose, including non-premium, premium, and pay-per-view (PPV) channels. Non-premium and premium channels are typically made available to subscribers for a fixed monthly charge, while pay-per-view (PPV) channels typically allow a subscriber to view a desired movie or video for a fixed charge per viewing. To accommodate automatic billing services for the viewing of such channels, a subscriber's satellite signal receiver must typically be connected to a telephone jack coupled to the local telephone exchange network. This connection creates a "return channel" through which subscriber billing information may be sent to a predetermined location for bill preparation.

The use of a telephone line return channel often creates problems for subscribers and service providers. For subscribers, a telephone line return channel is problematic since it often limits where the satellite signal receiver can be positioned as it should preferably be in close proximity to a telephone jack. Alternatively, subscribers may be forced to utilize relatively long telephone line connection wires, which often create an unaesthetic appearance. For service providers, a telephone line return channel is problematic since they typically must pay for any long distance charges associated with a return channel transmission. Accordingly, there is a need for return channel capability that does not utilize the existing telephone lines.

The use of a wireless return channel, while desirable, presents many challenges. For example, given the relatively large number of geographically distributed subscribers in a satellite television system, it is imperative to establish a time discipline for subscribers' return channel transmissions to assure that such transmissions are properly received.

See EP-A-0 825 773 (Thomson).

### SUMMARY OF THE INVENTION

The problems stated above, as well as other related problems of the prior art, are solved by the present invention, a method and apparatus for enabling transmission of a wireless return channel signal in a satellite communications system such as a satellite television broadcast system. Advantageously, the wireless return channel signal is both transmitted and received without requiring a telephone line connection.

According to an aspect of the present invention, there is provided a method for enabling wireless reception of return channel signals in a satellite communications system having at least one satellite and a plurality of subscribers. A system time reference is transmitted to the plurality of subscribers for establishing a precision frequency reference that is based on the system time reference. Return channel signals are wirelessly received from the plurality of subscribers using a carrier frequency synthesized from the precision frequency reference established from the system time reference.

According to another aspect of the present invention, there is provided a method for enabling wireless reception of return channel signals in a satellite communications system having at least one satellite and a plurality of subscribers. A system time reference is transmitted to each of the plurality of subscribers for respectively establishing time bases there from. Each of the time bases is respectively specific to one of the plurality of subscribers. The return channel signals are wirelessly received from the plurality of subscribers respectively in accordance with the time bases of the plurality of subscribers.

According to yet another aspect of the present invention, there is provided a method for enabling wireless transmission of return channel signals in a satellite communications system having at least one satellite and a plurality of subscribers. A system time reference is received from the at least one satellite for establishing a precision frequency reference that is based on the system time reference. A carrier frequency is synthesized from the precision frequency reference established from the system time reference. The return channel signal is wirelessly transmitted to the at least one satellite using the carrier frequency.

According to still yet another aspect of the present invention, there is provided a method for enabling wireless transmission of return channel signals in a satellite communications system having at least one satellite and a plurality of subscribers. A system time reference is received from the at least one satellite. A subscriber-specific time base is established from the system time reference. A return channel signal is wirelessly transmitted to the at least one satellite in accordance with the subscriber-specific time base.

These and other aspects, features and advantages of the present invention will become apparent from the following detailed description of preferred embodiments, which is to be read in connection with the accompanying drawings.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a schematic diagram of an exemplary system suitable for implementing the present invention;
FIG. 2 is a schematic diagram of an exemplary circuit configuration suitable for generating a system time reference signal in accordance with principles of the present invention;
FIG. 3 is a schematic diagram of an exemplary circuit configuration suitable for enabling transmission of a wireless return channel signal in accordance with principles of the present invention; and
FIG. 4 is a flow diagram illustrating a method for transmitting and receiving a wireless return channel signal in a satellite communications system having at least one satellite and a plurality of subscribers, according to an illustrative embodiment of the present invention.

The exemplifications set out herein illustrate preferred embodiments of the invention, and such exemplifications are not to be construed as limiting the scope of the invention in any manner.

### DETAILED DESCRIPTION OF THE INVENTION

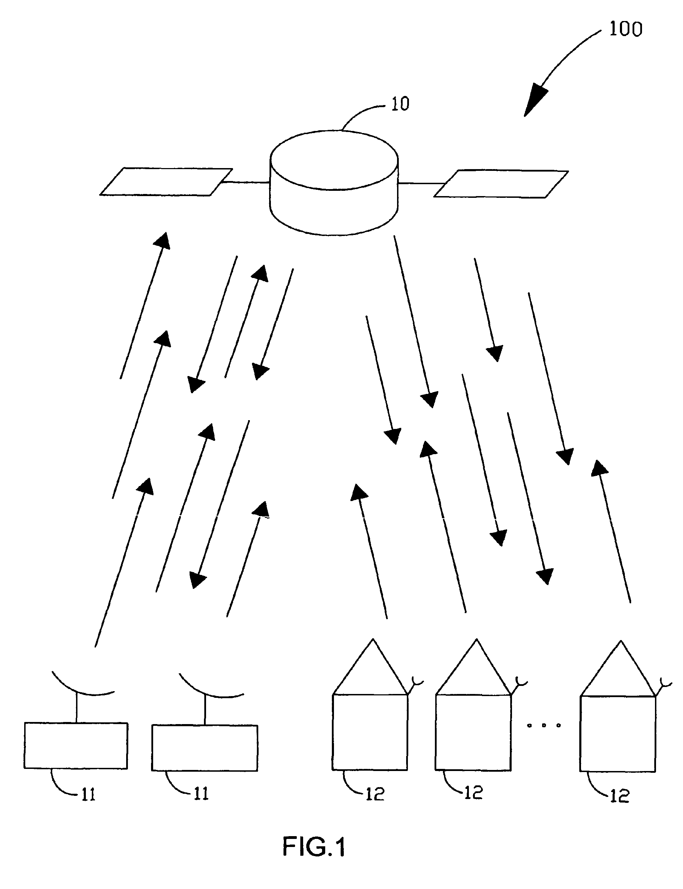

Referring now to the drawings, and more particularly to FIG. 1, a schematic diagram of an exemplary system suitable for implementing the present invention is shown. In particular, the exemplary system 100 of FIG. 1 represents a satellite television broadcast system. It is contemplated, however, that the principles of the present invention may be applicable to other types of systems. In FIG. 1, the system 100 includes one or more geosynchronous satellites 10 each having one or more transponders for enabling the reception and transmission of digital signals. A plurality of earth stations 11, each having one or more high-powered transmission antennas, transmit digital signals such as quadrature phase shift keyed (QPSK) data packets to the satellite 10 as uplink signals. The satellite 10 retransmits the received uplink signals as downlink signals for reception by a plurality of spatially distributed subscribers 12. According to an exemplary embodiment, the satellite 10 receives the uplink signals from the earth stations 11 in one frequency band, and transmits the downlink signals to the subscribers 12 in a different frequency band. In the exemplary system 100 of FIG. 1, the downlink signals represent digital television signals. Accordingly, each of the subscribers 12 is equipped with a satellite television signal receiver and one or more antennas capable of receiving and transmitting digital signals in one or more digital signal formats. According to a preferred embodiment, each of the subscribers 12 is equipped with one or more antennas capable of receiving digital quadrature phase shift keyed (QPSK) signals, and transmitting digital spread spectrum signals. By utilizing an antenna with signal transmission capabilities, the present invention advantageously provides a return channel for various functions without the need for a telephone line connection. Such functions include, but are not limited to, subscriber billing, internet connections, subscriber-to-subscriber communication (e.g., e-mail messages), advertisement feedback (e.g., impulse buys, requests for additional information, feedback regarding advertisement viewing/effectiveness, etc.), and subscriber initiated data downloads (e.g., games, utilities, software, system debugs, etc.).

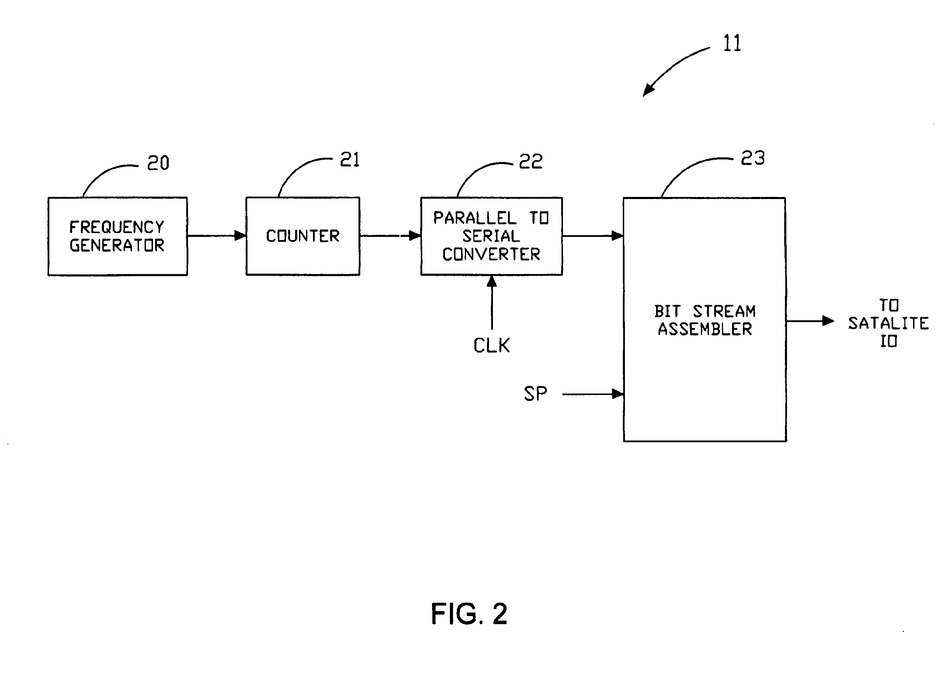

Referring now to FIG. 2, a schematic diagram of an exemplary circuit configuration suitable for generating a system time reference signal in accordance with principles of the present invention is shown. According to a preferred embodiment, the exemplary circuit configuration of FIG. 2 may be provided at one or more earth stations such as the earth stations 11 shown in FIG. 1. In FIG. 2, a frequency generator 20 generates a predetermined frequency standard. This frequency standard should be highly accurate, and does not have to be related to the bit clock of any digital modulation devices employed by the earth station 11. A counter 21 receives the frequency standard provided by the frequency generator 20 and performs a counting function in dependence upon the received frequency. The state of the counter 21 (i.e., its count) is used as a system time reference value to be distributed to the plurality of subscribers 12 via the satellite 10. A parallel to serial converter 22 receives a count value from the counter 21 and serially outputs the count value as a system time reference value in response to clock signals (CLK). A bit stream assembler 23 receives the system time reference value from the parallel to serial converter 22, and also receives satellite parameter (SP) data from the satellite 10. The satellite parameter (SP) data may include satellite position information (e.g., altitude, latitude, longitude, etc.) or orbital parameters from which such satellite position information can be calculated. In systems where multiple satellites are employed, orbital parameters may differ sufficiently to warrant multiple sets of satellite parameter (SP) data.

The bit stream assembler 23 assembles its received inputs to generate return channel control data, which may be embodied as one or more packets of digital data. As indicated, the return channel control data includes the system time reference value, the satellite parameter (SP) data, and may also include other data such as global or addressed messages. The return channel control data is transmitted by the earth station 11 as uplink data to the satellite 10, and retransmitted by the satellite 10 as downlink data to the plurality of subscribers 12. As will be explained hereinafter, the return channel control data is utilized by a satellite television signal receiver to enable generation of a wireless return channel signal in accordance with principles of the present invention.

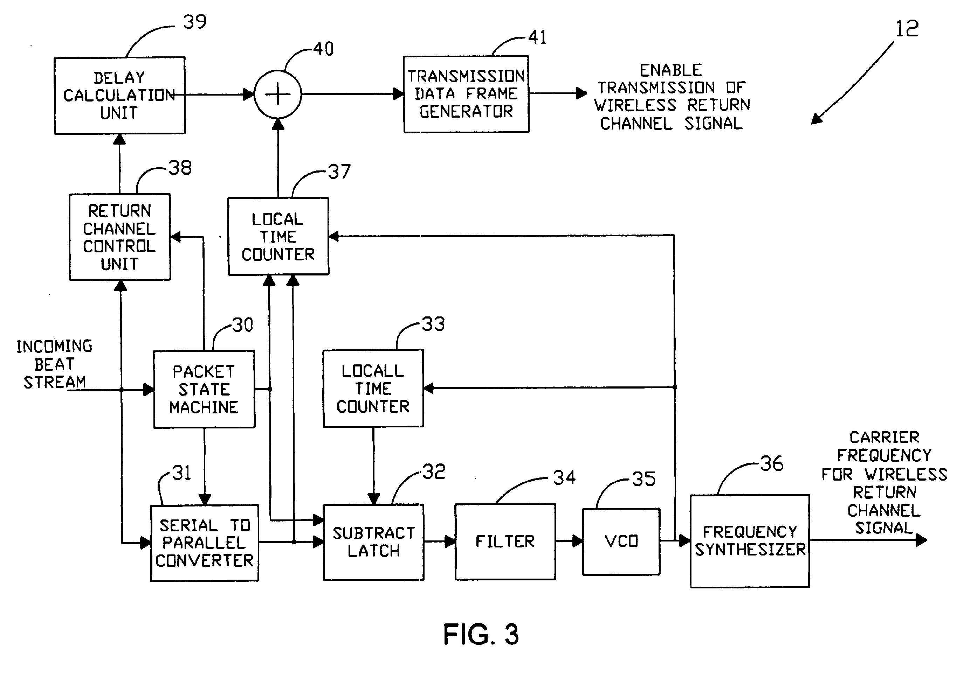

Referring now to FIG. 3, a schematic diagram of an exemplary circuit configuration suitable for enabling transmission of a wireless return channel signal in accordance with principles of the present invention is shown. The exemplary circuit configuration of FIG. 3 may be included in a satellite television signal receiver of a subscriber 12.

Given the relatively large number of geographically distributed subscribers, the present invention advantageously establishes a time discipline for subscriber's return channel transmissions to assure that such transmissions are properly received. To this end and in accordance with an embodiment of the present invention, orthogonal codes such as spread spectrum signals may be employed to eliminate crosstalk among subscribers' return channel transmissions. However, to utilize such orthogonal codes for return channel transmissions, the time alignment among subscribers' return channel transmissions must be closely controlled, as is achieved by the present invention.

In FIG. 3, an incoming bit stream including the return channel control data is received as a downlink signal from the satellite 10. A packet state machine 30 parses the incoming bit stream and generates first and second control signals that enable identification and extraction of the return channel control data or a portion thereof.

A serial to parallel converter 31 receives a first control signal from the packet state machine 30 that enables the serial to parallel converter 31 to extract the system time reference value portion of the return channel control data from the incoming bit stream. A subtract latch 32 receives the extracted system time reference value from the serial to parallel converter 31, and also receives a count value from a free running local time counter 33. The subtract latch 32 calculates and latches a difference value between the system time reference value and the count value provided from the local time counter 33. A filter 34 receives the difference value from the subtract latch 32 and performs a looping process to maintain the received difference value as a constant. That is, the filter 34 operates to maintain a constant difference between the received system time reference value and the count value provided from the local time counter 33. A voltage-controlled oscillator (VCO) 35 generates a signal having a frequency based on a voltage provided by the filter 34. As indicated in FIG. 3, the voltage-controlled oscillator (VCO) 35 clocks the local time counter 33 with its outputs. In this manner, the filter 34 provides a voltage to the voltage-controlled oscillator (VCO) 35 to increase or decrease its frequency output, thereby increasing or decreasing the frequency at which the local time counter 33 is clocked. Portions of this circuitry may be implemented using digital or analog technology. For example, one skilled in the art will recognize that a digital numerically controlled sampled data oscillator may be used in place of the analog voltage-controlled oscillator (VCO) 35.

A frequency synthesizer 36 also receives outputs from the voltage-controlled oscillator (VCO) 35, and synthesizes a carrier frequency for a wireless return channel signal in dependence upon those outputs. According to an exemplary embodiment, the carrier frequency generated by the frequency synthesizer 36 is approximately 17 GHz. In this manner, the present invention advantageously utilizes a time reference to create a frequency reference suitable for enabling wireless transmission of a return channel signal. A second local time counter 37 is utilized to provide a stable time reference for scheduling return channel transmissions and framing data packets of the return channel signal. The second local time counter 37 is initialized each time a system time reference value is received, and is clocked by outputs from the voltage-controlled oscillator (VCO) 35.

A return channel control unit 38 receives a second control signal from the packet state machine 30 that enables the return channel control unit 38 to extract the return channel control data from the incoming bit stream. A delay calculation unit 39 receives the extracted return channel control data from the return channel control unit 38 and uses that data to calculate another delay value corresponding to the particular subscriber 12. In particular, the delay value calculated by the delay calculation unit 39 is equal to: (the signal propagation delay time from the counter 21 of FIG. 2 to a transmitting antenna of the earth station 11) + (the signal propagation delay time from the transmitting antenna of the earth station 11 to a receiving antenna of the satellite 10) + (the transponder delay time at the satellite 10) + (the signal propagation delay time from a transmitting antenna of the satellite 10 to a receiving antenna of a subscriber 12) + (the signal propagation delay time from the reception of the incoming bit stream to the loading of the local time counter 37).

Each of the foregoing delay times is the same for all subscribers 12, except for the signal propagation delay time from a transmitting antenna of the satellite 10 to a receiving antenna of a particular subscriber 12. Accordingly, the delay time calculated by the delay calculation unit 39 is different for each subscriber 12 due to differences in the signal propagation delay time from a transmitting antenna of the satellite 10 to a receiving antenna of a particular subscriber 12. The signal propagation delay time from a transmitting antenna of the satellite 10 to a receiving antenna of a particular subscriber 12 can be estimated from the distance between the two antennas. This distance can be calculated from the respective three-dimensional positions of the satellite 10 and the particular subscriber 12. A three-dimensional position for the satellite 10 can be calculated from the satellite parameter (SP) data included in the return channel control data. A three-dimensional position for the particular subscriber 12 can be calculated from subscriber information such as peak signal antenna pointing data, satellite data upon installation, address, zip code, telephone number, etc.

An adder 40 adds the delay value calculated by the delay calculation unit 39 to a count value provided by the local time counter 37 to produce a sum value. This addition operation functions to synchronize each subscriber's 12 transmission of the wireless return channel signal. A transmission data frame generator 41 receives this sum value and enables transmission of the wireless return channel signal using the carrier frequency generated by the frequency synthesizer 36 in accordance with a time base represented by the received sum value. According to a preferred embodiment, the transmission data frame generator 41 enables transmission of the wireless return channel signal in accordance with a time base corresponding to the particular subscriber 12. This time base is such that if all of the subscribers 12 in the system 100 transmit their wireless return channel signal in accordance with the time base, all of the return channel signals will arrive at the satellite 10 at the same real time or within as narrow a time window as possible. In other words, the transmissions from the subscribers 12 will be time aligned (e.g., symbol boundaries are aligned) at the satellite 10 to the extent possible. This time base takes into account the different propagation delay times between the satellite 10 and each of the respective subscribers 12. According to a preferred embodiment, the wireless return channel signal is transmitted from each of the subscribers 12 to the satellite 10 as a spread spectrum signal. The satellite 10 retransmits the return channel signal to earth for reception by a predetermined receiving entity such as a satellite television billing entity. This entity may be represented by the earth stations 11 in FIG. 1. Since the transmissions from the subscribers 12 are time aligned at the satellite 10, the return channel signals are likewise received by the predetermined receiving entity in a time-aligned manner.

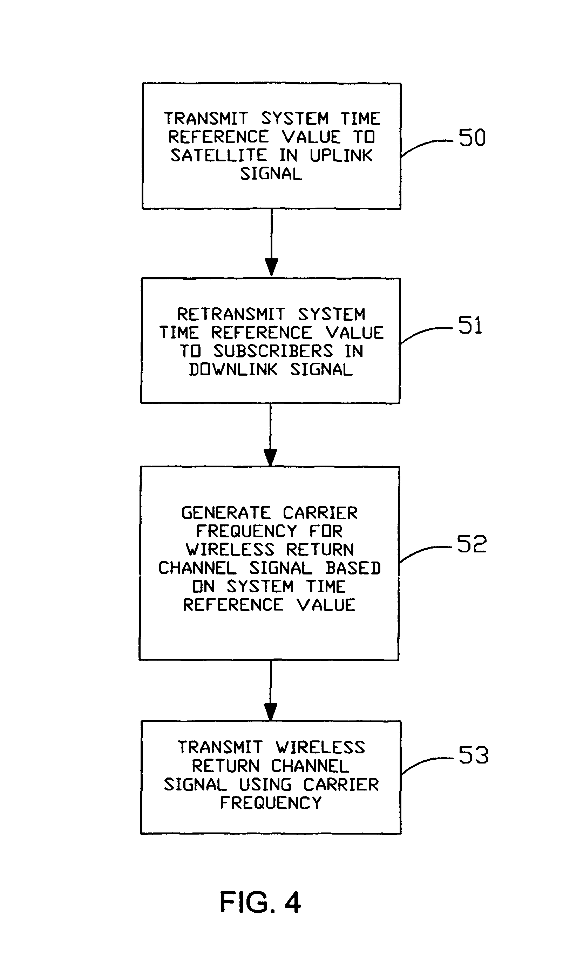

FIG. 4 is a flow diagram illustrating a method for transmitting and receiving a wireless return channel signal in a satellite communications system having at least one satellite and a plurality of subscribers, according to an illustrative embodiment of the present invention. For illustrative purposes, the steps of FIG. 4 will be described in relation to the exemplary embodiments shown in FIGs. 1 through 3.

An earth station 11 generates a digital bit stream that includes a system time reference value and satellite parameter (SP) data, and transmits the same in an uplink signal to the satellite 10 (step 405). The earth station 11 may employ a circuit configuration such as that shown in FIG. 2. The satellite 10 retransmits the digital bit stream including the system time reference value and SP data in a downlink signal for receipt by one or more of the subscribers 12 (step 410).

A satellite television signal receiver of the subscribers 12 generates a precision frequency reference and a precision local clock from the received system time reference (step 415). The satellite television signal receiver may employ a circuit configuration such as that shown in FIG. 3. The satellite television signal receiver of the subscribers 12 synthesizes a carrier frequency from the precision frequency reference for transmitting a wireless return channel signal (step 420). The satellite television signal receiver of the subscriber 12 calculates an offset for the precision local clock to compensate for a subscriber-to-satellite distance that varies for each of the subscribers 12 (step 425). The offset for the precision local clock may be calculated from a plurality of data including, for example, the SP data. A time base, particular to a given one of the subscribers 12, is derived from the (updated) precision local clock for use in controlling a time of transmission for that subscriber (step 430).

The wireless return channel signal is transmitted from each of the subscribers 12 to the satellite 10, respectively in accordance with the time base particular to each of the subscribers and using the carrier frequency synthesized from the precision frequency reference (step 435).

The wireless return channel signals are preferably transmitted using orthogonal spread spectrum codes. Since the subscribers 12 are geographically distributed, the subscribers 12 have to start their transmissions into the same time slot at different times (in accordance with their time base) to arrive at the satellite in time alignment. Each of the subscribers 12, in transmitting in the same time slot, will use a different orthogonal spread spectrum code.

In this way, all of the wireless return channel signals will arrive at the satellite 10 in a time-aligned sequence. If the frequency of distribution of the independently generated uplink carriers is relatively narrow and the time alignment relatively close, then multi-subscriber interference will be negligible and the full processing gain of the spread spectrum code will be realized.

As described herein, the present invention advantageously utilizes system time reference data to enable transmission of a return channel signal without requiring a telephone line connection. Moreover, a time base is established which enables a time division multiplex transmission scheme (i.e., different subscribers are assigned different transmission time slots) sufficient to support return channel transmissions from a geographically distributed subscriber base using orthogonal codes

Although the present invention has been described in relation to a television signal receiver, the invention is applicable to various systems, either with or without display devices, and phrases such as "satellite television signal receiver" or "television signal receiver" as used herein are intended to encompass various types of apparatuses and systems including, but not limited to, television sets or monitors that include a display device, and systems or apparatuses such as a set-top box, video tape recorder (VTR), digital versatile disk (DVD) player, video game box, or personal video recorder (PVR) that may not include display devices.
While this invention has been described as having a preferred design, the present invention can be further modified within the scope of this disclosure. This application is therefore intended to cover any variations, uses, of adaptations of the invention using its general principles. Further, this application is intended to cover such departures from the present disclosure as come within known or customary practice in the art to which this invention pertains and which fall within the limits of the appended claims.

## Claims

1. A method for enabling wireless reception of return channel signals in a satellite communications system having at least one satellite and a plurality of subscribers, the method **characterized by**:
transmitting, to the plurality of subscribers, a system time reference for establishing a precision frequency reference that is based on the system time reference (50,51); and
wirelessly receiving return channel signals from the plurality of subscribers using a carrier frequency synthesized from the precision frequency reference established from the system time reference (52, 53).

2. The method of claim 1, wherein:
the transmitted system time reference is further for respectively establishing time bases there from, each of the time bases being respectively specific to one of the plurality of subscribers, and
wirelessly receiving the return channel signals from the plurality of subscribers comprises wirelessly receiving the return channel signals respectively in accordance with the time bases of the plurality of subscribers.

3. The method of claim 2, wherein the return channel signals are wirelessly received from the plurality of subscribers in a time-aligned sequence respectively corresponding to the time bases of the plurality of subscribers.

4. The method of claim 2, wherein the time bases are for time aligning spread spectrum codes used by the plurality of subscribers in transmissions to the at least one satellite so as to establish a time-synchronous multi-user orthogonal spread spectrum signals, and the return channel signals are wirelessly received from the plurality of subscribers as the time-synchronous multi-user orthogonal spread spectrum signals.

5. The method of claim 2, wherein the return channel signals are wirelessly received from the plurality of subscribers using transmission time slots corresponding to a global Time Division Multiple Access (TDMA) scheme.

6. The method of claim 2, wherein the satellite communications system further has at least one earth-based station, and the method further comprises the step of initially receiving the system time reference from the at least one earth-based station.

7. The method of claim 2, further comprising the step of wirelessly transmitting the return channel signals received from the plurality of subscribers to a pre-determined earth-based receiving entity.

8. The method of claim 7, wherein the return channel signals are wirelessly transmitted to the pre-determined earth-based receiving entity in a time-aligned sequence.

9. The method of claim 1, wherein transmitting the system time reference comprises transmitting counter value.

10. The method of claim 1, wherein:
the system time reference is based on a signal, and the system time reference is for establishing at the plurality of subscribers a precision frequency reference that is based on the system time reference and that is synchronized with the signal, and
the return channel signals have a carrier frequency synthesized by the plurality of subscribers from the precision frequency reference established from the system time reference, and the carrier frequency is synchronized wit the signal.

11. A method for enabling wireless transmission of return channel signals in a satellite communications system having at least one satellite and a plurality of subscribers, the method **characterized by**:
receiving, from the at least one satellite, a system time reference for establishing a precision frequency reference that is based on the system time reference (51);
synthesizing a carrier frequency from the precision frequency reference established from the system time reference (52); and
wirelessly transmitting the return channel signal to the at least one satellite using the carrier frequency (53).

12. The method of claim 11, further comprising the step of:
establishing a subscriber-specific time base from the received system time reference, and
wherein wirelessly transmitting the return channel signal to the at least one satellite comprises wirelessly transmitting the return channel signal in accordance with the subscriber-specific time base.

13. The method of claim 12, wherein the return channel signal is wirelessly transmitted to the at least one satellite so as to form a time-aligned sequence of wireless transmissions with other ones of the plurality of subscribers.

14. The method of claim 13, wherein the subscriber-specific time base is for respectively time aligning a spread spectrum code from among a plurality of spread spectrum codes used by the plurality of subscribers in transmissions to the at least one satellite so as to establish a time-synchronous multi-user orthogonal spread spectrum signal, and the return channel signal is wirelessly transmitted as the time-synchronous multi-user orthogonal spread spectrum signal.

15. The method of claim 13, wherein said wirelessly transmitting step employs orthogonal spread spectrum codes to minimize multi-subscriber interference.

16. The method of claim 12, wherein the return channel signal is wirelessly transmitted using a transmission time slot corresponding to a global Time Division Multiple Access (TDMA) scheme.

17. The method of claim 12, further comprising the step of deriving a subscriber-specific local clock from the system time reference, and wherein said establishing step establishes the subscriber-specific time base using the subscriber-specific local clock.

18. The method of claim 17, further comprising the step of calculating an offset for the subscriber-specific local clock to compensate for varying subscriber distance to the at least one satellite.

19. The method of claim 18, further comprising the step of receiving Satellite Parameter (SP) data from the at least one satellite, and wherein said calculating step comprises the step of calculating the offset for the subscriber-specific local clock using at least the SP data.

20. The method of claim 11, wherein:
receiving the system time reference comprises receiving a counter value,
the method further comprises establishing the precision frequency reference, and
establishing the precision frequency reference comprises:
comparing the received counter value to a counter value generated by a subscriber from the plurality of subscribers, and
controlling a frequency of a signal at the subscriber based on the comparing of the received counter value and the subscriber-generated counter value.

21. The method of claim 12, wherein establishing the subscriber-specific time base comprises determining a distance between the at least one satellite and the respective subscriber.

22. The method of claim 11, wherein:
the system time reference is based on a signal, and the precision frequency reference is synchronized with the signal, and
the carrier frequency is synchronized with the signal.

23. An apparatus for for implementing the method according to any of the claims 1 to 10, **characterized in that** said apparatus comprises:
a transmitter for transmitting, to the plurality of subscribers, a system time reference for establishing a precision frequency reference that is based on the system time reference (10, 11); and
a receiver for wirelessly receiving return channel signals from the plurality of subscribers using a carrier frequency synthesized from the precision frequency reference established from the system time reference (10, 11).

24. An apparatus for implementing the method according to any of the claims 11 to 22, **characterized in that** said apparatus comprises:
a receiver for receiving, from the at least one satellite, a system time reference for establishing a precision frequency reference that is based on the system time reference (12);
a frequency synthesizer for synthesizing a carrier frequency from the precision frequency reference established from the system time reference (36); and
a transmitter for wirelessly transmitting the return channel signal to the at least one satellite using the carrier frequency (12).

## Patentansprüche

1. Verfahren zum Ermöglichen des drahtlosen Empfangs von Rückkanalsignalen in einem Satellitenkommunikationssystem mit mindestens einem Satelliten und mehreren Teilnehmern, wobei das Verfahren **gekennzeichnet ist durch**:
Senden einer Systemzeitreferenz zum Festsetzen einer Präzisionsfrequenzreferenz, die auf der Systemzeitreferenz (50, 51) beruht, an die mehreren Teilnehmer; und
drahtloses Empfangen von Rückkanalsignalen von den mehreren Teilnehmern unter Verwendung einer Trägerfrequenz, die aus der aus der Systemzeitreferenz festgesetzten Präzisionsfrequenzreferenz synthetisiert worden ist (52, 53).

2. Verfahren nach Anspruch 1, bei dem:
die gesendete Systemzeitreferenz ferner zum jeweiligen Festsetzen von Zeitbasen daraus dient, wobei jede der Zeitbasen jeweils für einen der mehreren Teilnehmer spezifisch ist, und
drahtloses Empfangen der Rückkanalsignale von den mehreren Teilnehmern, das das drahtlose Empfangen der Rückkanalsignale jeweils in Übereinstimmung mit den Zeitbasen der mehreren Teilnehmer umfasst.

3. Verfahren nach Anspruch 2, bei dem die Rückkanalsignale in einer zeitlich ausgerichteten Folge, die jeweils den Zeitbasen der mehreren Teilnehmer entspricht, drahtlos von den mehreren Teilnehmern empfangen werden.

4. Verfahren nach Anspruch 2, bei dem die Zeitbasen für die zeitlich ausgerichteten Spreizspektrumcodes dienen, die durch die mehreren Teilnehmer in Sendungen an den mindestens einen Satelliten verwendet werden, um zeitsynchrone orthogonale Mehrbenutzer-Spreizspektrumsignale festzusetzen, und bei dem die Rückkanalsignale von den mehreren Teilnehmern als die zeitsynchronen orthogonalen Mehrbenutzer-Spreizspektrumsignale drahtlos empfangen werden.

5. Verfahren nach Anspruch 2, bei dem die Rückkanalsignale von den mehreren Teilnehmern unter Verwendung von Sendezeitschlitzen, die einem globalen Zeitmultiplex-Mehrfachzugriffsschema (TDMA-Schema) entsprechen, drahtlos empfangen werden.

6. Verfahren nach Anspruch 2, bei dem das Satellitenkommunikationssystem ferner mindestens eine bodengestützte Station aufweist und bei dem das Verfahren ferner den Schritt des anfänglichen Empfangens der Systemzeitreferenz von der mindestens einen bodengestützten Station umfasst.

7. Verfahren nach Anspruch 2, das ferner den Schritt des drahtlosen Sendens der von den mehreren Teilnehmern empfangenen Rückkanalsignale an eine vorgegebene bodengestützte Empfangsentität umfasst.

8. Verfahren nach Anspruch 7, bei dem die Rückkanalsignale in einer zeitlich ausgerichteten Folge drahtlos an die vorgegebene bodengestützte Empfangsentität gesendet werden.

9. Verfahren nach Anspruch 1, bei dem das Senden der Systemzeitreferenz das Senden eines Zählerwerts umfasst.

10. Verfahren nach Anspruch 1, bei dem:
die Systemzeitreferenz auf einem Signal beruht und die Systemzeitreferenz zum Festsetzten einer Präzisionsfrequenzreferenz, die auf der Systemzeitreferenz beruht und die mit dem Signal synchronisiert ist, bei den mehreren Teilnehmern dient, und
die Rückkanalsignale eine Trägerfrequenz aufweisen, die durch die mehreren Teilnehmer aus der aus der Systemzeitreferenz festgesetzten Präzisionsfrequenzreferenz synthetisiert wird, wobei die Trägerfrequenz mit dem Signal synchronisiert wird.

11. Verfahren zum Ermöglichen der drahtlosen Übertragung von Rückkanalsignalen in einem Satellitenkommunikationssystem mit mindestens einem Satelliten und mit mehreren Teilnehmern, wobei das Verfahren **gekennzeichnet ist durch**:
Empfangen einer Systemzeitreferenz zum Festsetzen einer Präzisionsfrequenzreferenz, die auf der Systemzeitreferenz (51) beruht, von dem wenigsten einen Satelliten;
Synthetisieren einer Trägerfrequenz aus der Präzisionsfrequenzreferenz, die aus der Systemzeitreferenz (52) festgesetzt worden ist; und
drahtloses Senden des Rückkanalsignals an den mindestens einen Satelliten unter Verwendung der Trägerfrequenz (53).

12. Verfahren nach Anspruch 11, das ferner den folgenden Schritt umfasst:
Festsetzen einer teilnehmerspezifischen Zeitbasis aus der empfangenen Systemzeitreferenz, und
wobei das drahtlose Senden des Rückkanalsignals an den mindestens einen Satelliten das drahtlose Senden des Rückkanalsignals in Übereinstimmung mit der teilnehmerspezifischen Zeitbasis umfasst.

13. Verfahren nach Anspruch 12, bei dem das Rückkanalsignal drahtlos an den mindestens einen Satelliten gesendet wird, um mit anderen der mehreren Teilnehmer eine zeitlich ausgerichtete Folge drahtloser Sendungen zu bilden.

14. Verfahren nach Anspruch 13, bei dem die teilnehmerspezifische Zeitbasis für das jeweilige zeitliche Ausrichten eines Spreizspektrumcodes unter mehreren Spreizspektrumcodes, die durch die mehreren Teilnehmer in Sendungen an den mindestens einen Satelliten verwendet werden, um ein zeitsynchrones orthogonales Mehrbenutzer-Spreizspektrumsignal festzusetzen, dient und bei dem das Rückkanalsignal als das zeitsynchrone orthogonale Mehrbenutzer-Spreizspektrumsignal drahtlos gesendet wird.

15. Verfahren nach Anspruch 13, bei dem der Schritt des drahtlosen Sendens orthogonale Spreizspektrumcodes nutzt, um die Mehrteilnehmerstörung zu minimieren.

16. Verfahren nach Anspruch 12, bei dem das Rückkanalsignal unter Verwendung eines Sendezeitschlitzes, der einem globalen Zeitmultiplex-Mehrfachzugriffsschema (TDMA-Schema) entspricht, drahtlos gesendet wird.

17. Verfahren nach Anspruch 12, das ferner den Schritt des Ableitens eines teilnehmerspezifischen lokalen Takts aus der Systemzeitreferenz umfasst und bei dem der Schritt des Festsetzens die teilnehmerspezifische Zeitbasis unter Verwendung des teilnehmerspezifischen lokalen Takts festsetzt.

18. Verfahren nach Anspruch 17, das ferner den Schritt des Berechnens eines Versatzes für den teilnehmerspezifischen lokalen Takt umfasst, um eine veränderliche Teilnehmerentfernung zu dem mindestens einen Satelliten zu kompensieren.

19. Verfahren nach Anspruch 18, das ferner den Schritt des Empfangens von Satellitenparameterdaten (SP-Daten) von dem mindestens einen Satelliten umfasst und bei dem der Schritt des Berechnens den Schritt des Berechnens des Versatzes für den teilnehmerspezifischen lokalen Takt mindestens unter Verwendung der SP-Daten umfasst.

20. Verfahren nach Anspruch 11, bei dem:
das Empfangen der Systemzeitreferenz das Empfangen eines Zählerwerts umfasst,
das Verfahren ferner das Festsetzen der Präzisionsfrequenzreferenz umfasst, und
das Festsetzen der Präzisionsfrequenzreferenz umfasst:
Vergleichen des empfangenen Zählerwerts mit einem Zählerwert, der durch einen Teilnehmer von den mehreren Teilnehmern erzeugt wird, und
Steuern einer Frequenz eines Signals bei dem Teilnehmer anhand des Vergleichs des empfangenen Zählerwerts und des durch den Teilnehmer erzeugten Zählerwerts.

21. Verfahren nach Anspruch 12, bei dem das Festsetzen der teilnehmerspezifischen Zeitbasis das Bestimmen einer Entfernung zwischen dem mindestens einen Satelliten und dem jeweiligen Teilnehmer umfasst.

22. Verfahren nach Anspruch 11, bei dem:
die Systemzeitreferenz auf einem Signal beruht und die Präzisionsfrequenzreferenz mit dem Signal synchronisiert wird, und
die Trägerfrequenz mit dem Signal synchronisiert wird.

23. Vorrichtung zum Realisieren des Verfahrens gemäß einem der Ansprüche 1 bis 10, **dadurch gekennzeichnet, dass** die Vorrichtung umfasst:
einen Sender zum Senden einer Systemzeitreferenz zum Festsetzen einer Präzisionsfrequenzreferenz, die auf der Systemzeitreferenz (10, 11) beruht, an die mehreren Teilnehmer; und
einen Empfänger zum drahtlosen Empfangen von Rückkanalsignalen von den mehreren Teilnehmern unter Verwendung einer Trägerfrequenz, die aus der aus der Systemzeitreferenz (10, 11) festgesetzten Präzisionsfrequenzreferenz synthetisiert wird.

24. Vorrichtung zum Realisieren des Verfahrens nach einem der Ansprüche 11 bis 22, **dadurch gekennzeichnet, dass** die Vorrichtung umfasst:
einen Empfänger zum Empfangen einer Systemzeitreferenz zum Festsetzen einer Präzisionsfrequenzreferenz, die auf der Systemzeitreferenz (12) beruht, von dem mindestens einen Satelliten;
einen Frequenzsynthetisierer zum Synthetisieren einer Trägerfrequenz aus der aus der Systemzeitreferenz (36) festgesetzten Präzisionsfrequenzreferenz; und
einen Sender zum drahtlosen Senden des Rückkanalsignals an den mindestens einen Satelliten unter Verwendung der Trägerfrequenz (12).

## Revendications

1. Procédé pour permettre la réception de signaux de canal retour dans des systèmes de communication par satellite comportant au moins un satellite et une pluralité d'abonnés, le procédé étant **caractérisé par** :
une transmission, à la pluralité d'abonnées, d'une référence de temps du système pour établir une référence de fréquence de précision basée sur la référence (50, 51) de temps du système ; et
une réception sans fil de signaux de canal retour provenant de la pluralité d'abonnés à l'aide d'une fréquence porteuse synthétisée à partir de la référence de fréquence de précision établie à partir de la référence (52, 53) de temps du système.

2. Procédé selon la revendication 1, dans lequel :
la référence de temps du système émise permet en outre d'établir respectivement des bases temporelles à partir de celle-ci, chacune des bases temporelles étant respectivement spécifique à un de la pluralité d'abonnés, et
la réception sans fil des signaux de canal retour provenant de la pluralité d'abonnés comprend une réception sans fil des signaux de canal retour conformément respectivement aux bases temporelles de la pluralité d'abonnés.

3. Procédé selon la revendication 2, dans lequel les signaux de canal retour sont reçus sans fil de la pluralité d'abonnés selon une séquence alignée en temps correspondant respectivement aux bases temporelles de la pluralité d'abonnés.

4. Procédé selon la revendication 2, dans lequel les bases temporelles permettent un alignement temporel des codes à spectre étalé utilisés par la pluralité d'abonnés pour des émissions vers le au moins un satellite de sorte à établir des signaux à spectre étalé orthogonaux à utilisateurs multiples synchrones en temps, et les signaux de canal retour sont reçus sans fil de la pluralité d'abonnés comme les signaux à spectre étalé orthogonaux à utilisateurs multiples synchrones en temps.

5. Procédé selon la revendication 2, dans lequel les signaux de canal retour sont reçus sans fil de la pluralité d'abonnés à l'aide d'intervalles de temps d'émission correspondant à un schéma global TDMA (Time Division Multiple Access, Accès multiple par répartition dans le temps).

6. Procédé selon la revendication 2, dans lequel le système de communication par satellite comprend en outre au moins une station basée sur terre, et le procédé comprend en outre l'étape consistant à recevoir initialement la référence de temps du système de la au moins une station basée sur terre.

7. Procédé selon la revendication 2, comprenant en outre l'étape consistant à émettre sans fil les signaux de canal retour reçus de la pluralité d'abonnés à une entité de réception basée sur terre prédéterminée.

8. Procédé selon la revendication 7, dans lequel les signaux de canal retour sont émis sans fil vers l'entité de réception basée sur terre prédéterminée selon une séquence alignée en temps.

9. Procédé selon la revendication 1, dans lequel l'émission de la référence de temps du système comprend l'émission d'une valeur de compteur.

10. Procédé selon la revendication 1, dans lequel :
la référence de temps du système est basée sur un signal, et la référence de temps du système permet d'établir au niveau de la pluralité d'abonnés une référence de fréquence de précision basée sur la référence de temps du système et synchronisée avec le signal, et
les signaux de canal retour possèdent une fréquence porteuse synthétisée par la pluralité d'abonnés à partir de la référence de fréquence de précision établie à partir de la référence de temps du système, et la fréquence porteuse est synchronisée avec le signal.

11. Procédé pour permettre l'émission sans fil de signaux de canal retour dans un système de communication par satellite comportant au moins un satellite et une pluralité d'abonnés, le procédé étant **caractérisé par** :
une réception, du au moins un satellite, d'une référence de temps du système pour établir une référence de fréquence de précision basée sur la référence (51) de temps du système ;
une synthétisation d'une fréquence porteuse à partir de la référence de fréquence de précision établie à partir de la référence (52) de temps du système ; et
une émission sans fil du signal de canal retour vers le au moins un satellite à l'aide de la fréquence porteuse (53).

12. Procédé selon la revendication 11, comprenant en outre l'étape consistant à:
établir une base temporelle spécifique à un abonné à partir de la référence de temps du système reçue, et
dans lequel l'émission sans fil du signal de canal retour vers le au moins un satellite comprend une émission sans fil du signal de canal retour conformément à la base temporelle spécifique à un abonné.

13. Procédé selon la revendication 12, dans lequel le signal de canal de retour est émis sans fil vers le au moins un satellite de sorte à former une séquence alignée en temps d'émissions sans fil avec d'autres abonnés de la pluralité d'abonnés.

14. Procédé selon la revendication 13, dans lequel la base temporelle spécifique à un abonné permet respectivement un alignement temporel d'un code à spectre étalé faisant partie d'une pluralité de codes à spectre étalé utilisés par la pluralité d'abonnés dans des émissions vers le au moins un satellite de sorte à établir un signal à spectre étalé orthogonal à utilisateurs multiples synchrone en temps, et le signal de canal retour est émis sans fil comme le signal à spectre étalé orthogonal à utilisateurs multiples synchrone en temps.

15. Procédé selon la revendication 13, dans lequel ladite étape d'émission sans fil utilise des codes à spectre étalé orthogonaux pour minimiser des interférences multi-abonnés.

16. Procédé selon la revendication 12, dans lequel le signal de canal retour est émis sans fil à l'aide d'un intervalle temporel d'émission correspondant à un schéma global TDMA (Time Division Multiple Access, Accès multiple par répartition dans le temps).

17. Procédé selon la revendication 12, comprenant en autre l'étape consistant à dériver une horloge locale spécifique à un abonné de la référence de temps du système, et dans lequel ladite étape d'établissement établit la base temporelle spécifique à un abonné à l'aide de l'horloge locale spécifique à un abonné.

18. Procédé selon la revendication 17, comprenant en outre l'étape consistant à calculer un décalage de l'horloge locale spécifique à un abonné pour compenser une variation de distance de l'abonné par rapport au au moins un satellite.

19. Procédé selon la revendication 18, comprenant en outre l'étape consistant à recevoir des données SP (Satellite Parameter, Paramètre satellite) du au moins un satellite, et dans lequel ladite étape consistant à calculer comprend l'étape de calcul du décalage de l'horloge locale spécifique à un abonné en utilisant au moins les données SP.

20. Procédé selon la revendication 11, dans lequel :
la réception de la référence de temps du système comprend la réception d'une valeur de compteur,
le procédé comprend en outre l'établissement de la référence de fréquence de précision, et
l'établissement de la référence de fréquence de précision comprend :
une comparaison de la valeur de compteur reçue à une valeur de compteur générée par un abonné faisant partie de la pluralité d'abonnés, et
un contrôle d'une fréquence d'un signal au niveau de l'abonné basé sur la comparaison de la valeur de compteur reçue et de la valeur de compteur générée par l'abonné.

21. Procédé selon la revendication 12, dans lequel l'établissement de la base temporelle spécifique à un abonné comprend une détermination d'une distance entre le au moins un satellite et l'abonné respectif.

22. Procédé selon la revendication 11, dans lequel :
la référence de temps du système est basée sur un signal, et la référence de fréquence de précision est synchronisée avec le signal, et
la fréquence porteuse est synchronisée avec le signal.

23. Appareil pour implémenter le procédé selon une quelconque des revendications 1 à 10, **caractérisé en ce que** ledit appareil comprend :
un émetteur pour émettre, vers la pluralité d'abonnés, une référence de temps du système pour établir une référence de fréquence de précision basée sur la référence (10, 11) de temps du système ; et
un récepteur pour recevoir sans fil des signaux de canal retour de la pluralité d'abonnés à l'aide d'une fréquence porteuse synthétisée à partir de la référence de fréquence de précision établie à partir de la référence (10, 11) de temps du système.

24. Appareil pour implémenter le procédé selon une quelconque des revendications 11 à 22, **caractérisé en ce que** ledit appareil comprend :
un récepteur pour recevoir, du au moins un satellite, une référence de temps du système pour établir une référence de fréquence de précision basée sur la référence (12) de temps du système ;
un synthétiseur de fréquence pour synthétiser une fréquence porteuse à partir de la référence de fréquence de précision établie à partir de la référence (36) de temps du système ; et
un émetteur pour émettre sans fil le signal de canal retour vers le au moins un satellite à l'aide de la fréquence porteuse (12).
